# EUROPÄISCHE PATENTANMELDUNG

(11) **EP 4 454 446 A1**
(43) Veröffentlichungstag der Anmeldung: **30.10.2024**
(21) Anmeldenummer: 24164446.7
(22) Anmeldetag: 19.03.2024
(51) Int. Cl.: A01B 69/08, A01D 34/66, A01B 59/06, A01D 34/86

(54) **FRONTANBAUBARE ERNTEMASCHINE**

(30) Priorität: 27.04.2023 DE 102023110900
(71) Anmelder: Pöttinger Landtechnik GmbH, 4710 Grieskirchen (AT)
(72) Erfinder: REININGER, Markus, 4710 Grieskirchen (AT); SCHRANK, Manuel, 4710 Grieskirchen (AT); GREIFENEDER, August, 4710 Grieskirchen (AT)
(74) Vertreter: Thoma, Michael

(57) **Zusammenfassung**

Die vorliegende Erfindung betrifft eine Erntemaschine zum Frontanbau an einen Schlepper, insbesondere Mähmaschine, mit einem sich quer zur Fahrtrichtung erstreckenden Arbeitsaggregat, einem Anbaubock zum frontseitigen Anbau an den Schlepper sowie einer mehrachsig beweglichen Aufhängung zum beweglichen Aufhängen des Arbeitsaggregats am Anbaubock, wobei die mehrachsige Beweglichkeit der Aufhängung eine translatorische Beweglichkeit zum Verschieben des Arbeitsaggregats entlang einer Bewegungsbahn liegend quer zur Fahrtrichtung sowie eine aufrechte Schwenkachse zum Verschwenken des Arbeitsaggregats aufweist, wobei eine Schwenksteuerung zum Steuern des Verschwenkens des Arbeitsaggregats um die aufrechte Schwenkachse in Abhängigkeit der Querverschiebung entlang der Bewegungsbahn vorgesehen und dazu ausgebildet ist, die Arbeitsaggregatsseite, zu der hin die Verschiebung erfolgt, entgegen der Fahrtrichtung nach hinten und/oder die gegenüberliegende Arbeitsaggregatsseite in Fahrtrichtung nach vorne zu verschwenken.

## Beschreibung

Die vorliegende Erfindung betrifft eine frontanbaubare Erntemaschine, insbesondere in Form eines Mähwerks, mit einem sich quer zur Fahrtrichtung erstreckenden Arbeitsaggregat, einem Anbaubock zum frontseitigen Anbau an einen Schlepper sowie einer mehrachsig beweglichen Aufhängung zum beweglichen Aufhängen des Arbeitsaggregats am Anbaubock, wobei die mehrachsige Beweglichkeit der Aufhängung eine translatorische Beweglichkeit zum Verschieben des Arbeitsaggregats entlang einer Bewegungsbahn liegend quer zur Fahrtrichtung sowie eine aufrechte Schwenkachse zum Verschwenken des Arbeitsaggregats aufweist.

Solche frontseitig anbaubaren Erntemaschinen können als Arbeitsaggregat beispielsweise ein Mähwerk und/oder einen Querförderer, beispielsweise in Form eines Mergers, gegebenenfalls kombiniert mit einer Pickup umfassen, wobei solche Arbeitsaggregate insgesamt länglich konturiert sein bzw. eine Hauptachse besitzen können, die sich liegend quer zur Fahrtrichtung erstreckt. Beispielsweise kann das Mähwerk einen Mähbalken oder eine Reihe von nebeneinander angeordneten Mähwerkstrommeln oder Schneidtellern aufweisen, die entlang der genannten Hauptachse liegend quer zur Fahrtrichtung aufgereiht sind. Im Fall eines Mergers kann ein Förderband bzw. ein Endlosförderer vorgesehen sein, der aufgenommenes Erntegut liegend quer zur Fahrtrichtung versetzen kann und dementsprechend eine Hauptachse liegend quer zur Fahrtrichtung besitzt, wobei ggf. dem Förderband eine Pickup mit einer rotierend antreibbaren Stachelwalze zugeordnet sein kann.

Solche frontseitig anbaubaren Arbeitsaggregate sind in ihrer Arbeitsbreite begrenzt, üblicherweise um die für den Straßentransport vorgeschriebene Maximalbreite einhalten zu können. Um größere Arbeitsbreiten zu erzielen, können zusätzliche Arbeitsaggregate seitlich weiter auskragend angeordnet sein und beispielsweise heckseitig angebaut werden, wobei solche Seitenflügel der Erntemaschine dann für den Straßentransport in eine aufrechte Transportstellung geklappt oder um eine aufrechte Schwenkachse nach hinten bzw. vorne zusammengeschwenkt werden können, um die maximal Transportbreite einhalten zu können.

Durch die Breitenbegrenzung des frontseitig anbaubaren Arbeitsaggregats ergibt sich bei Kurvenfahrten oder auch bei Hangfahrten quer zur Hangneigung durch die sich dabei einstellende Abdrift die Problematik, dass der Schlepper mit seinen Rädern, insbesondere den Hinterrädern nicht mehr in dem von dem frontseitigen Arbeitsaggregat bearbeiteten Flurstreifen fährt, sondern beispielsweise vom Mähwerk stehengelassenes Gras niederdrückt oder vom Merger nicht aufgenommenes Erntegut überfährt. Gleichzeitig kann es bei solchen Kurvenfahrten oder schrägen Hangfahrten mit Abdrift dazu kommen, dass heckseitig angebaute Seitenflügel der Erntemaschine nicht mehr genügend Überlappung zum frontseitigen Arbeitsaggregat haben, so dass beispielsweise im Falle einer Mähmaschine ein schmaler Streifen ungeschnittenes Erntegut im Bereich der fehlenden Überlappung stehenbleibt.

Um diese Fahrspur- bzw. Überlappungsproblematik zu entschärfen, wurde bereits vorgeschlagen, das frontseitig angebaute Arbeitsaggregat quer zur Fahrtrichtung zu verschieben. Wird beispielsweise beim Abdriften am Hang festgestellt, dass das hangabwärtige Hinterrad des Schleppers Erntegut überfährt, das vom frontseitigen Arbeitsaggregat unbearbeitet geblieben ist, die Überlappung zum hangabwärtigen, heckseitig angebauten Arbeitsaggregat nicht mehr ausreicht, kann das frontseitig angebaute Arbeitsaggregat quer zur Fahrtrichtung hangabwärts verschoben werden.

Ähnlich kann das Arbeitsaggregat bei Kurvenfahrten zur Kurveninnenseite hin verstellt werden, um zu vermeiden, dass am kurveninneren Rand des bearbeiteten Fahrstreifens von dem kurveninneren, sozusagen die Kurven schneidenden Hinterrad unbearbeitetes Erntegut überfahren wird.

Solche Erntemaschinen mit seitenverschieblichen Arbeitsaggregaten zeigen beispielsweise die Schriften EP 3 845 048 A1, IT 2019 000 258 64 A1, DE 43 14 250 C1 oder DE 44 09 113 C1.

Andererseits ist es auch bekannt, Arbeitsaggregate in ihrem Anstellwinkel um eine aufrechte Schwenkachse zu verstellen, vgl. beispielsweise DE 10 2020 127 084 A1.

Die Schrift DE 29 23 821 A1 beschreibt einen Großflächenmäher, bei dem ein frontseitig angebautes Mähwerk sowohl querverschieblich als auch verschwenkbar ist. Dabei sind insgesamt drei Mähwerksaggregate vorgesehen, die alle frontseitig angebaut sind, wobei zwei seitlich weiter außen angeordnete Mähwerksaggregate vorauslaufen und zwischen sich einen ungemähten Streifen stehen lassen, der von dem nachlaufenden, aber immer noch frontseitig angebauten mittleren Mähwerksaggregat abgemäht werden soll und dieses dritte, mittlere Mähwerksaggregat ist mittels zwei Lenker gezogen aufgehängt, wobei die genannten Lenker durch ihre Anlenkpunkte leicht V-förmig gespreizt angeordnet sind, so dass die gezogene mittlere Mähwerkseinheit beim Ausschwenken nach links mit dem linken Aggregatsteil nach vorne schwenkt und beim Ausschwenken nach rechts mit dem rechten Aggregatsteil nach vorne schwenkt. Das mittlere Mähwerk ist hierdurch sozusagen nach Art einer Schaukel oder eines Pendels aufgehängt und entlang einer bogenförmigen Bewegungsbahn verschwenkbar, die in Fahrtrichtung nach vorne offen ist bzw. in Fahrtrichtung nach vorne konkav gewölbt ist. Die genannte Schrift verspricht sich hierdurch ein verlässlicheres Abmähen des von den Seitenmähwerken stehen gelassenen Erntegutstreifens bei Kurvenfahrten. Ungelöst bleibt allerdings die Problematik des Abdriftens bei schrägen Hangfahrten, da die nachlaufende bzw. gezogene Aufhängung des mittleren Mähwerks zu einem ungewollten bzw. ungesteuerten Wegpendeln des mittleren Mähwerks zur hangabwärtigen Seite führt. Zudem überfahren die Hinterräder des Traktors bei Kurvenfahrten ungemähte Ränder, wenn ohne die seitlichen, äußeren Mähwerke gearbeitet wird, beispielsweise wenn diese bei beengten Platzverhältnissen wie beispielsweise zwischen Büschen hochgeschwenkt werden müssen.

Der vorliegenden Erfindung liegt hiervon ausgehend die Aufgabe zugrunde, eine verbesserte Erntemaschine der eingangs genannten Art zu schaffen, die Nachteile des Stands der Technik vermeidet und letzteren in vorteilhafter Weise weiterbildet. Insbesondere soll bei Kurvenfahrten und schrägen Hangfahrten mit Abdriften des Schleppers ein Überfahren unbearbeiteter Erntegutbereiche durch die Hinterräder des Schleppers verlässlich vermieden und bei Vorhandensein seitlich angeordneter, weiterer Arbeitsaggregate eine verlässliche, ausreichende Überlappung sichergestellt werden.

Erfindungsgemäß wird die genannte Aufgabe durch eine Erntemaschine gemäß Anspruch 1 gelöst. Bevorzugte Ausgestaltungen der Erfindung sind Gegenstand der abhängigen Ansprüche.

Es wird also vorgeschlagen, das frontseitig angebaute Arbeitsaggregat sowohl seitlich zu verschieben als auch um eine aufrechte Schwenkachse zu verschwenken, um die Arbeitsbreite des Arbeitsaggregats bestmöglich zu nutzen und den bearbeiteten Bodenstreifen bestmöglich an Kurvenfahrten und schräge Hangfahrten mit Abdriften des Schleppers anpassen zu können. Dabei wird die Schwenkbewegung und die Seitenverschiebung aufeinander abgestimmt, dass das Arbeitsaggregat bei Verschiebung zur Kurveninnenseite hin bzw. hangabwärts so um die aufrechte Achse verschwenkt wird, dass das Arbeitsaggregat mit seiner genannten Hauptachse näherungsweise senkrecht zur Fahrtrichtung entlang der Kurvenbahn bzw. zur tatsächlichen Fahrtrichtung entlang des schrägen Hangs steht.

Erfindungsgemäß ist eine Schwenksteuerung zum Steuern des Verschwenkens des Arbeitsaggregats um die aufrechte Schwenkachse in Abhängigkeit der Querverschiebung vorgesehen und dazu ausgebildet, die Arbeitsaggregatsseite, zu der hin die Verschiebung erfolgt, entgegen der Fahrtrichtung nach hinten und/oder die gegenüberliegende Arbeitsaggregatsseite in Fahrtrichtung nach vorne zu verschwenken.

Durch eine solchermaßen koordinierte Querverschiebung und Verschwenkung des Arbeitsaggregats kann die komplette Arbeitsbreite des Arbeitsaggregats ausgenutzt werden, da das Arbeitsaggregat mit seiner genannten Hauptachse möglichst senkrecht auf die zu bearbeitende Fläche gestellt bzw. dazu angestellt werden kann. Gleichzeitig kann ein Überfahren von stehenden Gräsern bzw. unbearbeiteten Ernteguts in der Kurve und am Hang vermieden und, soweit vorhanden, zu ergänzenden Seitenaggregaten beispielsweise in Form von heckseitigen Seitenmähwerken oder Seiten-Mergern, eine ausreichende Überlappung sichergestellt werden, sodass eine vollständige Bearbeitung über die gesamte Arbeitsbreite der Erntemaschine ohne stehengelassene Streifen zwischen den Arbeitsaggregaten sichergestellt werden kann.

Die genannte Schwenksteuerung kann grundsätzlich verschieden ausgebildet sein. Nach einer vorteilhaften Weiterbildung der Erfindung kann die Schwenksteuervorrichtung eine mechanische Zwangskoppelung der translatorischen Beweglichkeit entlang der Bewegungsbahn liegend quer zur Fahrtrichtung und der Schwenkbarkeit um die aufrechte Schwenkachse aufweisen, sodass die Verschwenkung des Arbeitsaggregats mechanisch zwangsgesteuert in Abhängigkeit von der Querverschiebung erfolgt.

Eine solche mechanische Koppelung kann in Weiterbildung der Erfindung durch eine Lenkeranordnung realisiert sein, die einen Teil der Aufhängung bilden kann, durch die das Arbeitsaggregat beweglich am Anbaubock der Erntemaschine aufgehängt ist. Die genannten Lenker können um jeweils aufrechte Schwenkachsen einerseits schwenkbar am Anbaubock und andererseits schwenkbar am Arbeitsaggregat bzw. einem das Arbeitsaggregat tragenden Maschinenrahmen angelenkt sein, sodass die genannten Lenker eine Viergelenksaufhängung bilden, die die Kinematik der Beweglichkeit des Arbeitsaggregats vorgibt und die Verschwenkbarkeit in Abhängigkeit der Querverschiebung erzwingt.

Alternativ zu einer solchen mechanischen Zwangskoppelung könnte die Steuervorrichtung aber auch eine beispielsweise hydraulische Koppelung oder eine steuerungstechnische Koppelung vorsehen, die die Bewegungen zweier Stellaktoren aufeinander abstimmt. Beispielsweise kann der translatorischen Beweglichkeit entlang der Bewegungsbahn liegend quer zur Fahrtrichtung ein Verschiebe-Aktor und der aufrechten Schwenkachse ein Schwenk-Aktor zugeordnet sein, beispielsweise in Form von Hydraulikzylindern, die hydraulisch miteinander gekoppelt sein können, um die Stellbewegungen aufeinander abzustimmen, oder alternativ in Form von elektromotorischen Aktoren, beispielsweise in Form von Spindelantrieben, die mittels einer elektronischen Steuervorrichtung bzw. einer elektrischen Steuervorrichtung durch Anpassung der elektrischen Stellsignale aufeinander abgestimmt werden können.

Mit einer mechanischen Zwangskoppelung über die genannte Lenkeranordnung, die eine Viergelenksaufhängung bilden kann, lässt sich jedoch ein besonders stabiler und einfacher Aufbau erzielen, wobei nur ein Stellaktor zum Verstellen bzw. zum Steuern von sowohl Querverschiebung und Verschwenkung ausreicht.

Vorteilhafterweise kann die Aufhängung, insbesondere die genannte Lenkeranordnung in Form eines Viergelenks, eine Kinematik vorgeben, die das Arbeitsaggregat entlang einer bogenförmigen Bewegungsbahn liegend quer zur Fahrtrichtung verschiebt, wobei die genannte Bewegungsbahn entgegen der Fahrtrichtung nach hinten offen ist bzw. in Fahrtrichtung nach vorne konvex gekrümmt ist. Dementsprechend wird das Arbeitsaggregat in einer mittleren Stellung oder unausgelenkten Neutralstellung, in der das Arbeitsaggregat genau mittig, symmetrisch zum Anbaubock bzw. auch zur vertikalen Längsmittelebene des Schleppers ausgerichtet sein kann, in Fahrtrichtung am weitesten vorne positioniert, zumindest mit einem mittleren Abschnitt des Arbeitsaggregats, während das Arbeitsaggregat, zumindest dessen mittlerer Abschnitt bei Querverschieben entlang der bogenförmigen Bewegungsbahn entgegen der Fahrtrichtung ein Stück weit nach hinten verfahren wird. Wenn das Arbeitsaggregat zur Kurveninnenseite seitlich verschoben wird, kann es dem Anbaubock bzw. dem Schlepper ein Stück weit näher kommen, wobei es in der genannten Weise gleichzeitig auch verschränkt wird.

Die genannte bogenförmige Bewegungsbahn kann ein Kreisbogen sein, dessen Krümmungsmittelpunkt bezogen auf die Fahrtrichtung des Schleppers hinter oder unter dem Schlepper liegen kann, oder auch eine andere Krümmungskontur besitzen, beispielsweise eine Parabelform oder eine Ellipsenform.

In vorteilhafter Weiterbildung der Erfindung kann die genannte Lenkeranordnung eine schiebende Aufhängung bilden, die das Arbeitsaggregat schiebt, wobei die aggregatsseitigen Anlenkpunkte der Lenker in Fahrtrichtung betrachtet weiter vorne liegen können als die anbaubockseitigen Anlenkpunkte der Lenker, so dass die Lenker das Arbeitsaggregat vor sich her schieben.

Insbesondere können die genannten Lenker einerseits am Anbaubock angelenkt sein und vom Anbaubock aus nach vorne auskragen, wobei die vorderen, vom Anbaubock auskragenden Enden der Lenker gelenkig an einem Maschinenrahmen angelenkt sein können, welcher das Arbeitsaggregat trägt.

Um bei einer Querverschiebung gleichzeitig eine Verschwenkung vorzusehen, könne die Lenker in Draufsicht betrachtet, d.h. bei einer Blickrichtung parallel zu den aufrechten Schwenkachsen der Lenker, V-förmig aufgespreizt sein bzw. zueinander spitzwinklig geneigt angeordnet sein.

Eine solche V-förmige Anstellung der Lenker kann insbesondere in Fahrtrichtung nach vorne aufgespreizt sein. Die aggregatsseitigen Anlenkpunkte der Lenker können voneinander weiter beabstandet sein als die anbaubockseitigen Anlenkpunkte der Lenker.

Um das Gewicht des Arbeitsaggregats und die im Arbeitsbetrieb auftretenden dynamischen Belastungen stabil tragen zu können, können zwei Doppellenker vorgesehen sein bzw. vier Lenker, die paarweise angeordnet sein können und paarweise dieselben Schwenkachsen haben können. Insbesondere können in Draufsicht betrachtet, d.h. bei einer Blickrichtung entlang der aufrechten Schwenkachsen, jeweils zwei Lenker übereinander angeordnet sein und sich jeweils eine anbaubockseitige Schwenkachse und eine arbeitsaggregatsseitige Schwenkachse teilen bzw. entlang koaxialer Schwenkachsen angelenkt sein. Die übereinander angeordneten Lenker können in der genannten Draufsicht einander überdenken, insbesondere einander kongruent, identisch überdecken.

Alternativ zu separaten Doppellenkern können die Lenker aber auch in Form von Gitterlenkern oder Fachwerklenkern oder Blechformteillenkern ausgebildet sein, die jeweils eine ausreichende Dicke bzw. Erstreckung in aufrechter Richtung aufweisen können, um die Gewichtskräfte des Arbeitsaggregats und die hinzukommenden dynamischen Belastungen ohne übermäßige Biegebelastungen abtragen zu können.

Die genannten Lenker der Lenkeranordnung können in Weiterbildung der Erfindung starr bzw. längenunveränderlich ausgebildet sein. In alternativer Weiterbildung der Erfindung kann aber zumindest ein Lenker auch längenveränderbar, beispielsweise teleskopierbar ausgebildet sein, wie noch näher erläutert wird.

Die Kinematik der Aufhängung kann dazu ausgebildet sein, eine Verschwenkung um die aufrechte Achse im Bereich von plus/minus einigen Grad, beispielsweise plus/minus 2° bis plus/minus 20° oder plus/minus 3° bis plus/minus 10° vorzusehen, wenn das Arbeitsaggregat jeweils maximal zur Seite verschoben worden ist.

Der seitliche Verschiebeweg kann an die Arbeitsbreite des Arbeitsaggregats angepasst sein und beispielsweise einen Verstellweg nach rechts und links von jeweils 5% bis 20% oder 5% bis 15% der Arbeitsbreite des Arbeitsaggregats betragen. Beträgt beispielsweise die Arbeitsbreite des Arbeitsaggregats 3 m, was einen Straßentransport ermöglicht, kann eine Verschiebbarkeit von beispielsweise 10 cm - 40 cm oder 15 - 30 cm oder etwa 20 cm sowohl nach rechts als auch nach links vorgesehen sein, was ausreicht, um bei üblichen Kurvenradien eines Schleppers ein Überfahren ungemähten Ernteguts zu verhindern.

Die Verschwenkung des Arbeitsaggregats kann mit zunehmender seitlicher Verschiebung kontinuierlich zunehmen. Insbesondere kann das Arbeitsaggregat in seiner unausgelenkten Neutralstellung bzw. seiner mittig vor dem Anbaubock positionierten Stellung kontinuierlich stärker verschwenkt werden, je weiter das Arbeitsaggregat aus der genannten Neutralstellung zu einer Seite hin verschoben wird. Beispielsweise kann der Schwenkwinkel um die aufrechte Schwenkachse proportional zur seitlichen Auslenkung erhöht werden bzw. verstellt werden.

Beispielsweise kann einer Verschwenkrate von 0,2° - 1 ° oder beispielsweise etwa 0,5° pro Zentimeter seitlicher Verschiebung vorgesehen sein.

Die Querverstellung und Verschwenkung des Arbeitsaggregats kann durch einen fremdenergiebetätigten Stellaktor, beispielsweise in Form eines Hydraulikzylinders erfolgen, wobei eine Steuerung des Stellaktors manuelle Betätigungsmittel aufweisen kann, beispielsweise in Form eines Joysticks oder einer Touchscreen-Steuerung mit einem verschiebbaren Positionierungselement auf dem Bildschirm, das durch Antippen und Verschieben auf dem Bildschirm verstellbar ist, beispielsweise nach rechts oder nach links, um eine entsprechende Verschiebung des Arbeitsaggregats nach rechts oder nach links veranlassen bzw. steuern zu können.

In vorteilhafter Weiterbildung der Erfindung kann auch eine automatisierte Steuerung der Querverschiebung und Verschwenkung des Arbeitsaggregats vorgesehen sein, wobei eine automatische Steuerungsvorrichtung beispielsweise einen Jobrechner mit beispielsweise einer Mikroprozessorsteuerung aufweisen kann, um die Querverschiebung und Verschwenkung in Abhängigkeit eines relevanten Betriebsparameters des Arbeitsaggregats und/oder des Schleppers zu steuern.

Beispielsweise kann eine solche Steuervorrichtung ein Lenkwinkelsignal berücksichtigen, das den Lenkwinkel des Schleppers angibt und beispielsweise vom Schlepper bereitgestellt werden kann. Insbesondere kann die Steuervorrichtung die Querverschiebung und Verschwenkung des Arbeitsaggregats in Abhängigkeit des Lenkwinkelsignals derart steuern, dass das Arbeitsaggregat zur Kurveninnenseite hin verschoben wird, vorzugsweise je stärker, je größer der Lenkwinkel ist.

Um ein Überfahren von unbearbeitetem Erntegut durch die Hinterräder des Schleppers bestmöglich zu vermeiden, kann die Steuervorrichtung dazu ausgebildet sein, das Arbeitsaggregat in Abhängigkeit des Lenkwinkels so quer zu verschieben, dass die Spurmitte der Hinterachse des Schleppers, die bei Kurvenfahrten sozusagen die Kurve schneiden, etwa auf der Arbeitsaggregats-Mitte fahren bzw. das Arbeitsaggregat so weit zur kurveninneren Seite hin verschieben, dass die Arbeitsaggregats-Mitte etwa mit der Spurmitte der Heckachse zusammenfällt. Gleichzeitig kann die Steuervorrichtung dabei eine Verschwenkung des Arbeitsaggregats vorsehen, die das Arbeitsaggregat etwa senkrecht zur Fahrtrichtung entlang des Kurvenbogens ausrichtet.

Alternativ oder zusätzlich kann die Steuervorrichtung auch eine Hangneigung berücksichtigen, insbesondere in Form einer sensorisch erfassten Querneigung des Schleppers und/oder Querneigung des Arbeitsaggregats, anhand derer ein Abdriften des Schleppers abgeschätzt werden kann, beispielsweise unter Berücksichtigung von Bodenverhältnissen wie nass oder feucht oder trocken. Insbesondere kann die Steuervorrichtung des Arbeitsaggregats zur hangabwärtigen Seite hin verschieben, und zwar vorzugsweise je stärker, je größer die sensorisch erfasste Hangneigung ist.

Alternativ oder zusätzlich kann die Steuervorrichtung auch ein Abdriftsignal berücksichtigen, das das tatsächliche Abdriften des Schleppers am Hang angibt. Das Abdriften kann dabei beispielsweise durch Bestimmen einer Divergenz zwischen Längsachse des Schleppers und tatsächlicher Fahrtrichtung bestimmt werden, beispielsweise durch optische Erfassung der befahrenen Bodenkontur oder in anderer Weise.

Die vorgenannte Lenkeranordnung, die das Arbeitsaggregat beweglich am Anbaubock aufhängt und die mechanische Koppelung von Querverschiebung zu Verschwenkung erzielt, kann mit starren Lenkern arbeiten und eine feste Kinematik besitzen. Alternativ kann die Lenkeranordnung aber auch mit einer variablen Kinematik ausgestattet sein, wobei insbesondere zumindest einer der Lenker der Lenkeranordnung längenveränderbar, beispielsweise teleskopierbar ausgebildet sein kann, sodass sich durch Längenveränderung des zumindest einen Lenkers die Kinematik der Lenkeranordnung verstellen lässt.

Beispielsweise kann einer der Lenker als Druckmittelzylinder, beispielsweise Hydraulikzylinder ausgebildet sein und/oder einen Teleskopträger zusammen mit einem Druckmittelzylinder aufweisen, sodass sich die effektive Länge zwischen den beiden Anlenkpunkten des Lenkers verstellen lässt. Um den Hydraulikzylinder nicht zu sehr auf Biegung zu beanspruchen, kann beispielsweise ein teleskopierbarer Träger bzw. teleskopierbarer Lenker vorgesehen sein, dessen Längeneinstellung durch einen zugeordneten Druckmittelzylinder verstellt werden kann.

Als Aktor zum Verstellen der Länge des Lenkers können aber auch andere Antriebsmittel vorgesehen sein, beispielsweise ein Spindelantrieb.

Die Länge des zumindest einen längenveränderbaren Lenkers kann im Rahmen einer Voreinstellung angepasst bzw. eingestellt werden. Vorteilhafterweise kann die Länge des Lenkers aber auch während des Arbeitsbetriebs verstellt werden, beispielsweise manuell durch einen Schlepperführer, beispielsweise durch Eingabe auf einem Touchscreen oder Betätigen eines Schalters oder Reglers. Alternativ kann auch eine automatisierte oder halbautomatisierte Steuerung vorgesehen sein, die relevante Betriebsparameter berücksichtigt, beispielsweise eine Hangneigung quer zur Fahrtrichtung.

Insbesondere kann durch einen solchen längenveränderbaren Lenker der Schlepperführer oder auch ein Steuerungssystem aktiv in den Krümmungsradius der Bewegungsbahn des Arbeitsaggregats eingreifen, falls die Arbeitsaggregatsausrichtung bezogen auf die Schlepperausrichtung negative Auswirkungen auf das Arbeitsverhalten hat. Stellt sich beispielsweise ein Mähwerk bezogen auf die Schlepperausrichtung zu sehr quer, kann der Lenker verkürzt oder verlängert werden, um den Anstellwinkel zu beeinflussen, um negative Auswirkungen auf das Mähverhalten zu vermeiden.

Vorteilhafterweise kann ein solcher längenveränderbarer Lenker bei einer Kollision im Außenbereich des Arbeitsaggregats die Funktion einer Anfahrsicherung wahrnehmen. Ein seitliches Anfahren leitet einen Drehimpuls in das Arbeitsaggregat ein, der, je nach Seite des Anfahrens, durch Längung oder Verkürzung des Lenkers abgemildert werden kann.

Die vorliegende Erfindung wird nachfolgend anhand bevorzugter Ausführungsbeispiele und zugehöriger Zeichnungen näher erläutert. In den Zeichnungen zeigen:
- Fig. 1:: eine perspektivische Frontansicht einer Erntemaschine zum frontseitigen Anbau an einen Schlepper, die die mehrachsig bewegliche Aufhängung in einer unausgelenkten Neutralstellung zeigt,
- Fig. 2:: eine perspektivische Frontansicht der Erntemaschine aus Fig. 1, die die Aufhängung und damit das Arbeitsaggregat in einer seitlich ausgelenkten Stellung zeigt,
- Fig. 3:: eine Draufsicht auf die Erntemaschine aus den vorhergehenden Figuren in einer ausgelenkten Neutralstellung,
- Fig. 4:: eine Draufsicht auf die Erntemaschine ähnlich Fig. 3 in einer nach rechts ausgelenkten Stellung,
- Fig. 5:: eine Draufsicht auf die Erntemaschine ähnlich den Figuren 3 und 4 in einer nach links ausgelenkten Stellung,
- Fig. 6:: eine Draufsicht auf einen Schlepper mit der daran angebauten Erntemaschine aus den vorhergehenden Figuren, wobei zusätzlich zum frontangebauten Arbeitsaggregat auch noch zwei heckseitig angebaute Seitenaggregate gezeigt sind, wobei das Erntemaschinen-Schlepper-Gespann bei Geradeausfahrt dargestellt ist,
- Fig. 7:: eine Draufsicht auf das Erntemaschinen-Schleppergespann aus Fig. 6 bei Fahren einer Rechtskurve ohne Querverschiebung des frontseitigen Arbeitsaggregats, um das Überfahren des stehengelassenen Ernteguts mit dem rechten Hinterrad zu verdeutlichen,
- Fig. 8:: eine Draufsicht auf das Erntemaschinen-Schlepper-Gespann aus den Figuren 6 und 7 ebenfalls bei Fahren einer Rechtskurve, wobei jedoch das frontseitige Arbeitsaggregat zur kurveninneren, d.h. rechten Seite hin verschoben und entsprechend eingeschwenkt ist, um das Überfahren unbearbeiteten Ernteguts mit dem rechten Hinterrad zu vermeiden,
- Fig. 9:: eine Draufsicht auf das Erntemaschinen-Schlepper-Gespann aus den Figuren 6 bis 8 beim Abdriften bei Befahren eines nach rechts abschüssigen Hangs, wobei das frontseitige Arbeitsaggregat ohne Querverschiebung dargestellt ist, um das Überlappungsproblem zum hangabwärtigen Seitenaggregat zu verdeutlichen,
- Fig. 10:: eine Draufsicht auf das Erntemaschinen-Schlepper-Gespann beim Befahren eines nach rechts abschüssigen Hangs ähnlich Fig. 9, wobei jedoch das frontseitige Arbeitsaggregat hangabwärts verschoben und eingeschwenkt ist, um das Überfahren von unbearbeitetem Erntegut mit dem rechten Hinterrad und ein Überlappungsproblem zum hangabwärtigen Seitenaggregat zu vermeiden, und
- Fig. 11:: eine alternative Ausführungsvariante der mehrachsig beweglichen Aufhängung des Arbeitsaggregats der Erntemaschine mit zwei separaten Verstellaktoren für die Querverschiebung und die Verschwenkung.

Wie die Figuren zeigen, umfasst die Erntemaschine 1 einen Anbaubock 2, mithilfe dessen die Erntemaschine 1 an den Schlepper 3 frontseitig angebaut werden kann. Der Anbaubock 2 kann insbesondere mittels einer per se bekannten Dreipunktanlenkung umfassend Ober- und Unterlenker an den Schlepper 3 angebaut werden und für die genannte Dreipunktanlenkung entsprechende Anlenkpunkte 4 aufweisen.

Vorteilhafterweise kann der Anbaubock 2 vom Schlepper 3 ausgehoben werden, um die Erntemaschine 1 anzuheben, und abgesenkt werden, um die Erntemaschine 1 im Arbeitsbetrieb über das Feld zu führen.

Am Anbaubock 2 ist eine Aufhängung 5 vorgesehen, durch die ein Maschinenrahmen 6 aufgehängt und geführt ist, wobei der genannte Maschinenrahmen 6 beispielsweise einen sich quer zur Fahrtrichtung liegend erstreckenden Rahmenträger 7 aufweisen kann, an dem das Arbeitsaggregat 8 der Erntemaschine 1 aufgehängt bzw. angebracht ist.

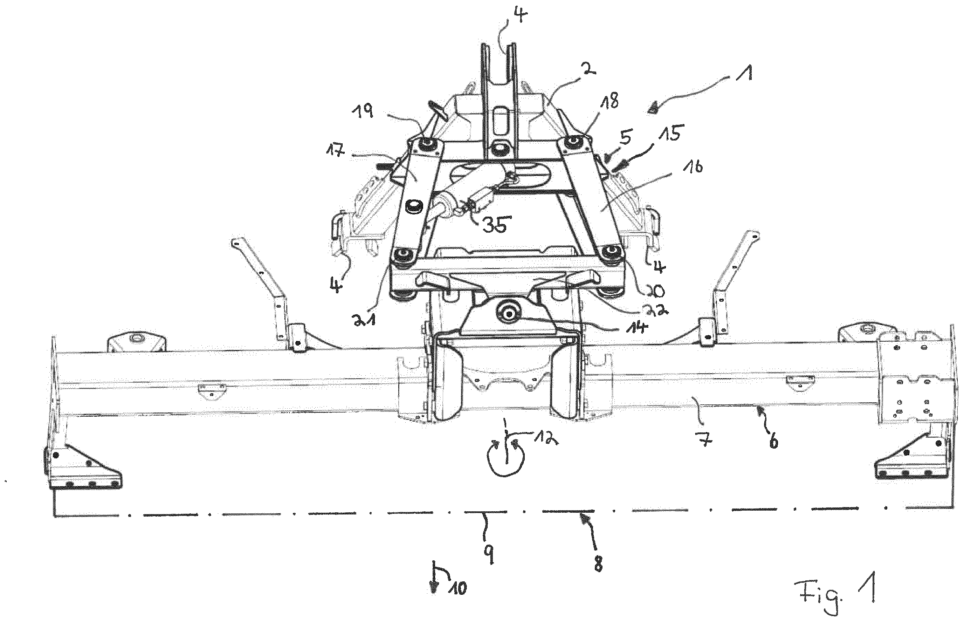

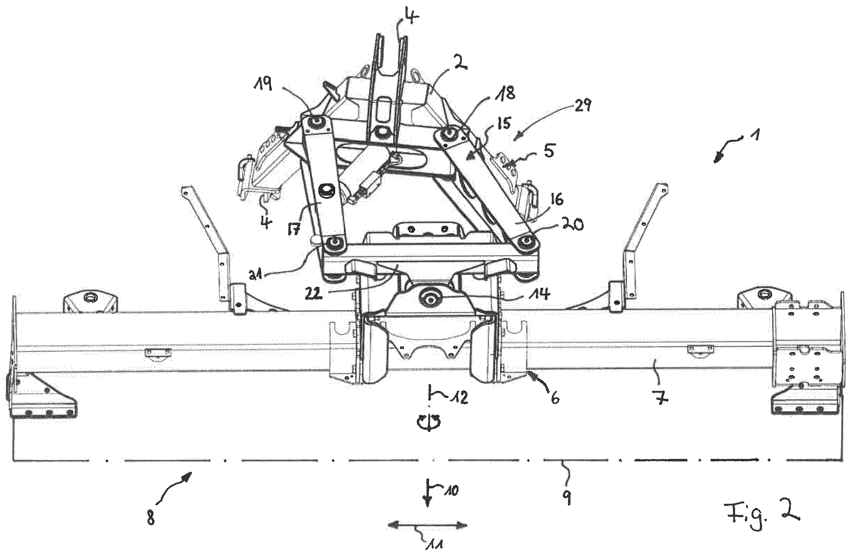

Je nach Ausbildung der Erntemaschine 1 kann das genannte Arbeitsaggregat 8 beispielsweise ein Mähwerk sein, beispielsweise in Form einer Reihe nebeneinander angeordneter Mähtrommeln oder eines Messerbalkens mit rotierend antreibbaren Messerscheiben. Das genannte Arbeitsaggregat 8 kann eine insgesamt längliche Erstreckung oder Konturierung besitzen und/oder eine Hauptachse 9 aufweisen, die durch die nebeneinander aufgereihten Arbeitswerkzeuge wie beispielsweise die Schneidtrommeln oder Messerscheiben definiert sein kann und sich liegend quer zur Fahrtrichtung 10 erstreckt, vgl. Figur 1 und Figur 2.

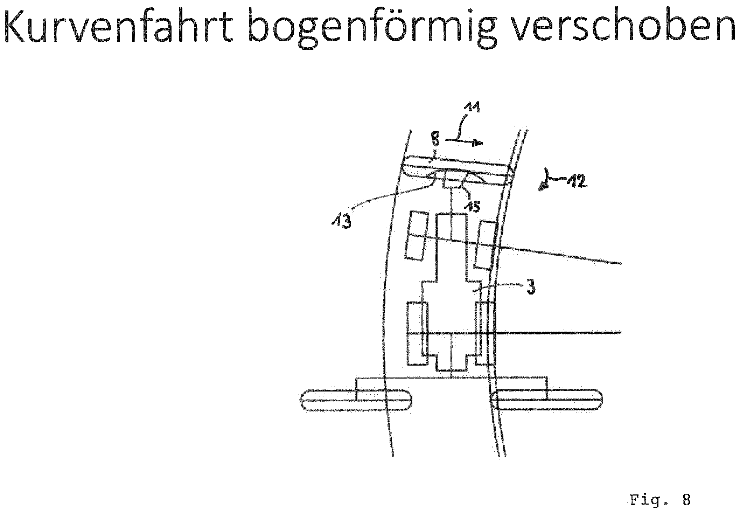

Die Aufhängung 5 ist mehrachsig beweglich ausgebildet und besitzt einerseits eine translatorische Bewegungsachse 11 zum Querverschieben des Arbeitsaggregats 8 entlang einer Bewegungsbahn 13, die sich liegend quer zur Fahrtrichtung 10 erstreckt und einen bogenförmig konturierten Verlauf besitzen kann, vgl. Figur 8. Insbesondere kann die Bewegungsbahn 13 der translatorischen Querverschieblichkeit bezogen auf die Fahrtrichtung 10 nach hinten offen sein bzw. in Fahrtrichtung nach vorne konvex gekrümmt sein, beispielsweise zumindest näherungsweise eine Kreisbahn bilden, deren Krümmungsmittelpunkt hinter dem Schlepper liegen kann.

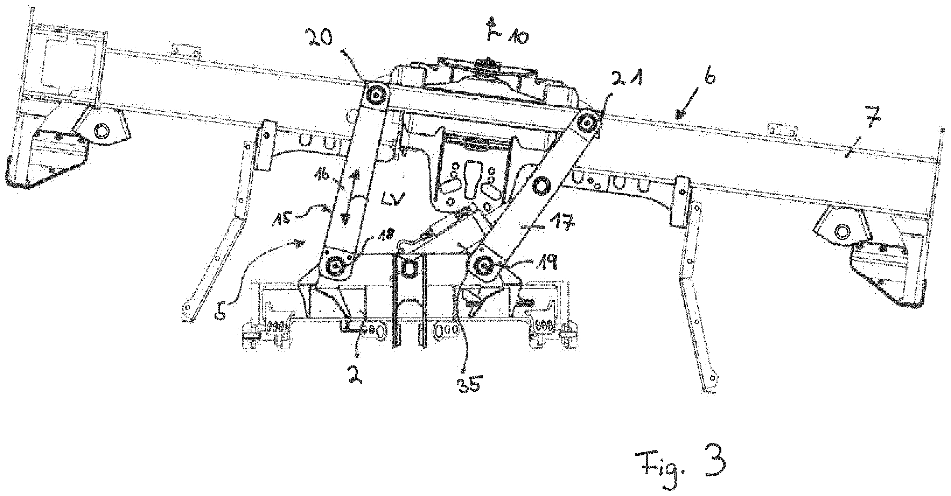

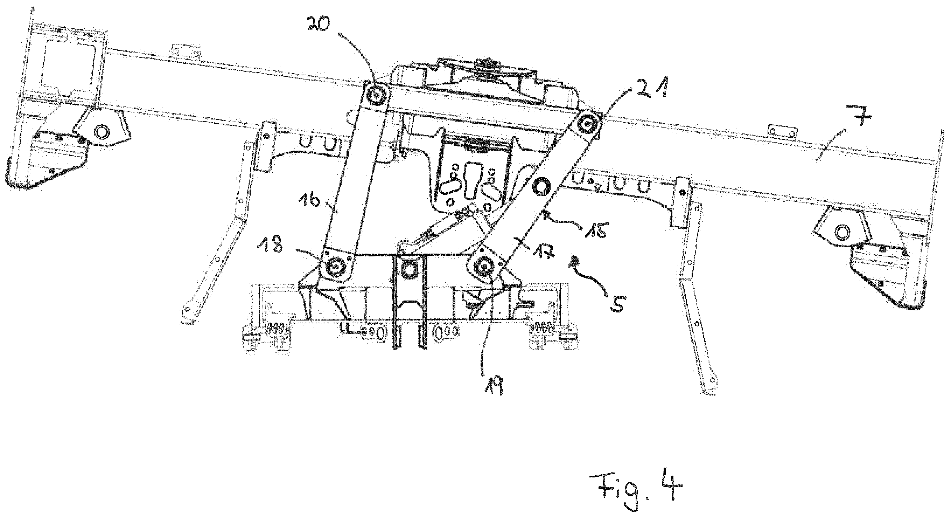

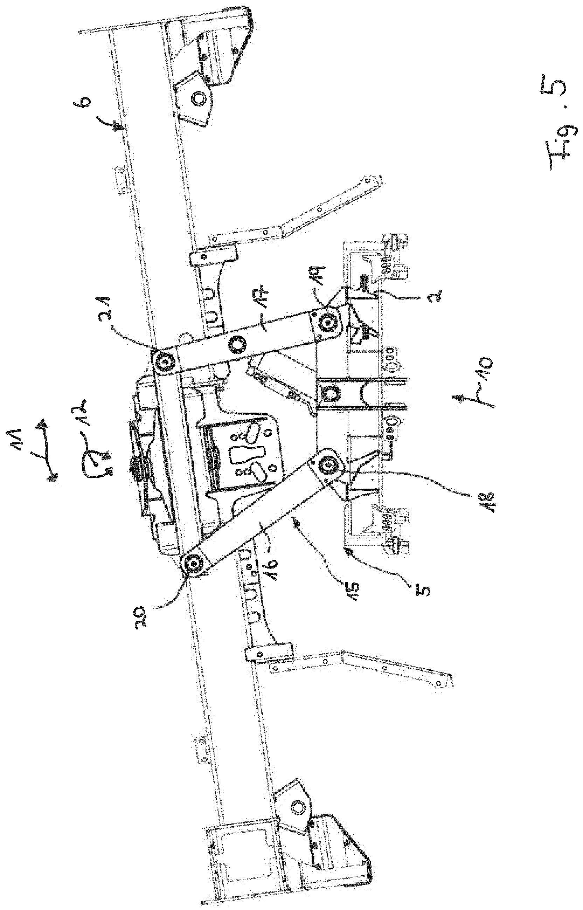

Zum anderen besitzt die Aufhängung 5 einen rotatorischen Freiheitsgrad zum Verschwenken des Arbeitsaggregats 8 um eine aufrechte Schwenkachse 12, wie dies ein Vergleich der Figuren 3 bis 5 verdeutlicht.

Die genannte Aufhängung 5 kann dabei in vertikaler Richtung unbeweglich bzw. steif ausgebildet sein, um das Arbeitsaggregat 8 in vorbestimmter Höhenstellung relativ zum Anbaubock 2 zu führen. Alternativ kann die Aufhängung 5 aber auch eine Höhenbeweglichkeit aufweisen, vorzugsweise kombiniert mit einer gewichtsentlastenden Federeinrichtung, um das Arbeitsaggregat 8 leichtfüßig über den Boden führen zu können.

Wie die Figuren 1 und 2 zeigen, kann die Aufhängung 5 auch eine liegende, näherungsweise in Fahrtrichtung 10 weisende Pendelachse 14 aufweisen, um Rollbewegungen des Arbeitsaggregats 8 zu ermöglichen, sodass sich das Arbeitsaggregat 8 durch Anheben eines seitlichen Randabschnitts und Absenken des gegenüberliegenden anderen Seitenabschnitts an Bodenwellen mit Querneigung anpassen kann.

Die genannte Aufhängung 5 kann insbesondere von dem genannten Anbaubock 2 in Fahrtrichtung 10 nach vorne auskragen und das Arbeitsaggregat 8 vor sich herschieben, vgl. beispielsweise Figur 3.

Vorteilhafterweise kann die Aufhängung 5 eine Lenkeranordnung 15 umfassen, die zwischen Anbaubock 2 und Maschinenrahmen 6 bzw. Arbeitsaggregat 8 vorgesehen und ein Viergelenk mit aufrechten Schwenkachsen bilden kann. Insbesondere kann die Lenkeranordnung 15 zwei Lenker 16 und 17 aufweisen, die ggf. als Doppellenker, d.h. zwei paarweise einander zugeordnete Lenker ausgebildet sein oder auch aus einem Lenkerrahmen bestehen können, der beispielsweise fachwerkartig aus Streben aufgebaut sein kann.

Die genannten Lenker 16 und 17 der Lenkeranordnung 15 besitzen vorteilhafterweise einerseits anbaubockseitige Anlenkpunkte 18, 19, mit denen die Lenker 16 und 17 an ihren hinteren Enden insbesondere direkt am Anbaubock 2 oder einer damit verbundenen Konsole verbunden sein können. Zum anderen besitzen die Lenker 16, 17 arbeitsaggregatsseitige Anlenkpunkte 20, 21, mit denen die Lenker 16 und 17 an ihren vorderen Enden am Maschinenrahmen 6 oder einer damit verbundenen Pendelträgerkonsole 22 verbunden sein können, vgl. Figur 1.

Wie die Figuren zeigen, sind die Lenker 16 und 17 an ihren Anlenkpunkten 18 bis 21 jeweils um aufrechte Schwenkachsen schwenkbar gelagert, sodass die Lenker 16, 17 ein Viergelenk bilden, welches in einer liegenden Ebene verschwenkt werden kann. Die genannten aufrechten Schwenkachsen können die einzigen Schwenkachsen der Lenker 16, 17 sein bzw. können die genannten Lenker 16, 17 fest in der genannten liegenden Ebene geführt sein, um das Gewicht des Arbeitsaggregats tragen zu können. Wie gesagt, kann aber auch eine auf- und abfahrbare bzw. auf- und abpendelbare Anordnung der Lenkeranordnung 15 vorgesehen sein, beispielsweise durch eine Lenkerkonsole, die am Anbaubock 2 um eine liegende Querachse schwenkbar gelagert sein und durch eine Federeinrichtung vorgespannt sein kann, um das Arbeitsaggregat gewichtszuentlasten.

Wie die Figuren zeigen, können die Lenker 16 und 17 V-förmig zueinander gespreizt angeordnet sein, insbesondere in ihrer unausgelenkten Neutralstellung, vgl. Figur 1 und Figur 3. Die genannte Spreizstellung des Viergelenks wird dabei durch eine unterschiedliche Beabstandung der arbeitsaggregatsseitigen Anlenkpunkte 18 und 19 voneinander einerseits und Beabstandung der arbeitsaggregatsseitigen Anlenkpunkte 20, 21 voneinander andererseits definiert.

Wie die Figuren zeigen, können die arbeitsaggregatsseitigen Anlenkpunkte 20, 21 voneinander weiter beabstandet sein als die anbaubockseitigen Anlenkpunkte 18, 19.

Durch die Spreizung des Viergelenks, das von der Lenkeranordnung 15 definiert wird, erfolgt bei Querverschieben des Arbeitsaggregats 8 entlang der genannten Bewegungsbahn 13 zu einer Seite hin gleichzeitig ein Verschwenken des Arbeitsaggregats 8 um die aufrechte Schwenkachse 12.

Die Lenkeranordnung 15 bildet insofern eine Steuervorrichtung 23 in Form einer mechanischen Zwangssteuerung zum Steuern der Schwenkbewegung um die Schwenkachse 12 in Abhängigkeit der Querverschiebung entlang der Bewegungsbahn 13.

Um die Kinematik der Lenkeranordnung 15 einstellen bzw. bei Bedarf passend verstellen zu können, kann zumindest einer der Lenker 16, 17 längenveränderbar ausgebildet sein, beispielsweise teleskopierbar ausgebildet sein, wobei den längenveränderbaren Lenker ein Aktor zum Verstellen der Länge beispielsweise in Form eines Hydraulikzylinders zugeordnet sein kann. Ein solcher Hydraulikzylinder kann ggf. den Lenker selbst bilden oder, um höhere Aufhängungslasten tragen zu können, einem längenverstellbaren Aufhängungsträger zugeordnet sein. In der Figur 3 symbolisiert der Doppelpfeil LV die Längenveränderbarkeit des Lenkers 16.

Durch einen solchen längenveränderbaren Lenker 16 kann der Schlepperführer oder auch ein automatisiertes Lenksystem aktiv in den Krümmungsradius bzw. die Kinematik eingreifen, falls die Mähwerksausrichtung bezogen auf die Schlepperausrichtung negative Auswirkungen auf das Mähverhalten hat. Beispielsweise kann die Mähwerksausrichtung bezogen auf die Ausrichtung des Schleppers beim Abdriften bei schrägen Hangfahrten korrigiert werden. Gleichzeitig kann ein solcher längenveränderbarer Lenker 16 bei einer Kollision im Außenbereich des Arbeitsaggregats die Funktion einer Anfahrsicherung bzw. eines Stoßdämpfers übernehmen. Es können auch beide Lenker 16 und 17 in der beschriebenen Weise längenveränderbar sein.

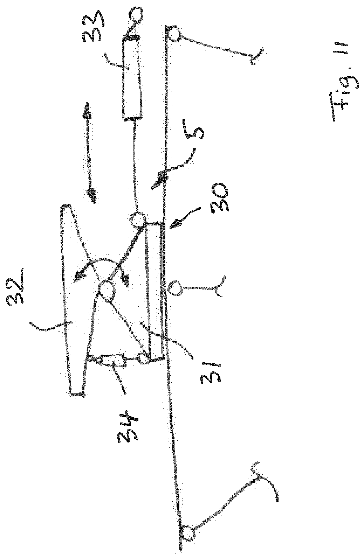

Wie Figur 11 zeigt, kann die Aufhängung 5 ggf. auch eine Schlittenführung 30 umfassen, die einen entlang der genannten Bewegungsbahn 13 verschieblich geführten Schlitten 31 aufweisen kann. Die genannte Bewegungsbahn 13 kann dabei in Form einer Schiebeführung ausgebildet sein.

Der genannte Schlitten 31 kann einen Rahmenträger 32 tragen, der an dem Schlitten 31 um die aufrechte Schwenkachse 12 schwenkbar gelagert sein kann, um die Schwenkbewegung des Arbeitsaggregats 8 realisieren zu können.

Wie Figur 11 zeigt, können die beiden Bewegungsachsen, d.h. die Verschiebung entlang der Bewegungsbahn 13 und die Verschwenkung um die Schwenkachse 12 durch zwei Schiebe- und Schwenkaktoren 33, 34 realisiert werden.

Im Falle der Lenkeranordnung 15, wie sie in den Figuren 1 bis 5 dargestellt ist, kann ein einzelner Stellaktor 35 ausreichen, der beispielsweise am Anbaubock 2 einerseits und an der Pendelträgerkonsole 22 andererseits angelenkt sein kann, um die Lenkeranordnung 15 verstellen zu können.

Der genannte Stellaktor 35 bzw. die beiden Stellaktoren 33, 34 können von einer Steuervorrichtung beispielsweise in Form eines Jobrechners angesteuert werden, um das Arbeitsaggregat 8 bei Kurvenfahrten und/oder Hangfahrten mit Abdriften verstellen zu können, wobei die genannte Steuervorrichtung 36 eine manuelle Eingabevorrichtung zum manuellen Betätigen der Querverstellung und des Verschwenkens aufweisen kann. Alternativ oder zusätzlich kann auch ein automatisches Steuermodul vorgesehen sein, das mit einer Sensorik 37 zum Erfassen relevanter Betriebsparameter verbunden ist und in Abhängigkeit dieser die Stellaktoren ansteuert, insbesondere in Abhängigkeit eines Lenkwinkelsignals, das den Lenkwinkel des Schleppers 3 charakterisiert und/oder eines Hangneigungs- und/oder Abdriftsignals, das das Abdriften bzw. die Hangneigung charakterisiert.

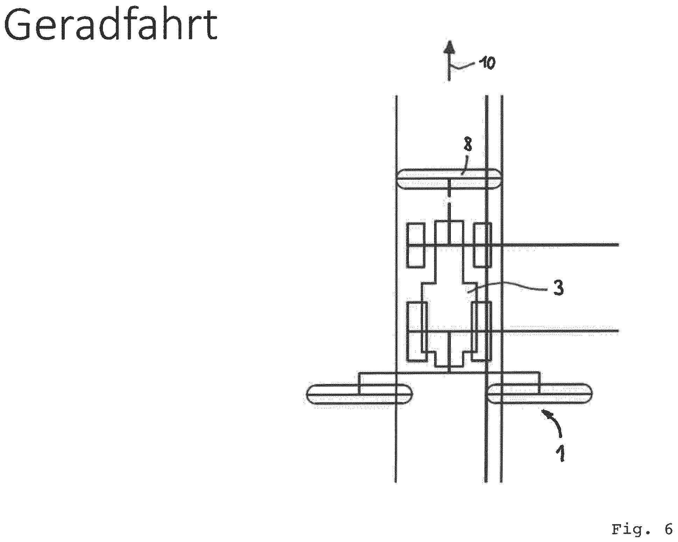

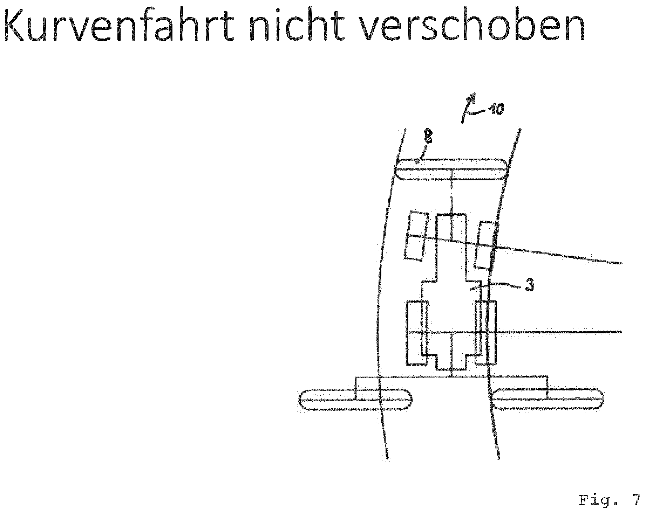

Wie die Figuren 6 und 8 zeigen, kann bei Kurvenfahrten das Arbeitsaggregat 8 zur Kurveninnenseite hin quer verschoben werden und dabei gleichzeitig auch eingeschwenkt werden, insbesondere derart, dass der kurveninnere Seitenabschnitt des Arbeitsaggregats 8 nach hinten und/oder der kurvenäußere Seitenabschnitt des Arbeitsaggregats nach vorne verschwenkt wird. Beispielsweise bei einer Rechtskurve, wie sie Figur 8 zeigt, wird das Arbeitsaggregat 8 zum einen nach rechts verschoben und dabei gleichzeitig mit seinem rechten Rand nach hinten und mit seinem linken Rand nach vorne geschwenkt, vgl. Figur 8 im Vergleich zu den Figuren 6 und 7.

Die Abstimmung der Schwenkbewegung um die aufrechte Schwenkachse 12 mit der Querverschiebung entlang der Bewegungsbahn 13 kann dabei von der Lenkeranordnung 15 bewerkstelligt werden.

Vergleicht man Figur 7, die eine Kurvenfahrt ohne Verstellung des Arbeitsaggregats 8 zeigt, mit der Figur 8, die eine Kurvenfahrt mit Verstellung zeigt, wird ersichtlich, dass das Überfahren von unbearbeitetem Erntegut durch das kurveninnere Heckrad vermieden werden kann, wenn die Verstellung in der beschriebenen Weise zur kurveninneren Seite mit einem Einschwenken des Arbeitsaggregats vorgenommen wird. Durch das Einschwenken zusätzlich zum Querverschieben kann die maximale Arbeitsbreite des Arbeitsaggregats 8 im Wesentlichen erhalten werden, insbesondere dann, wenn die Verschwenkung so ausgeführt wird, dass das Arbeitsaggregat 8 mit seiner Hauptachse 9 im Wesentlichen senkrecht zur Tangente an die Kurvenbahn geführt wird.

Die Querverstellung entlang der Bewegungsbahn 13 wird dabei vorteilhafterweise so bemessen, dass das Arbeitsaggregat 8 mit seiner Mitte über der Bewegungsbahn fährt, die die Spurmitte der Hinterräder nimmt.

Wie Figur 8 verdeutlicht, kann durch die vorgeschlagene Verstellung des Arbeitsaggregats 8 auch die Überlappung zum kurveninneren Seitenflügel bzw. Heckflügel der Erntemaschine 1 sichergestellt werden.

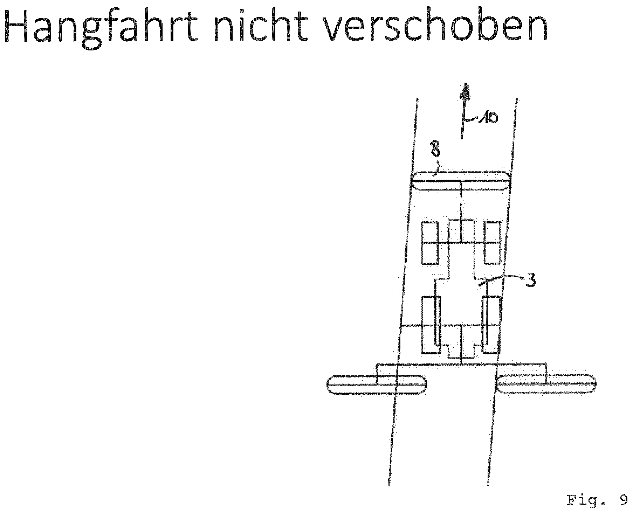

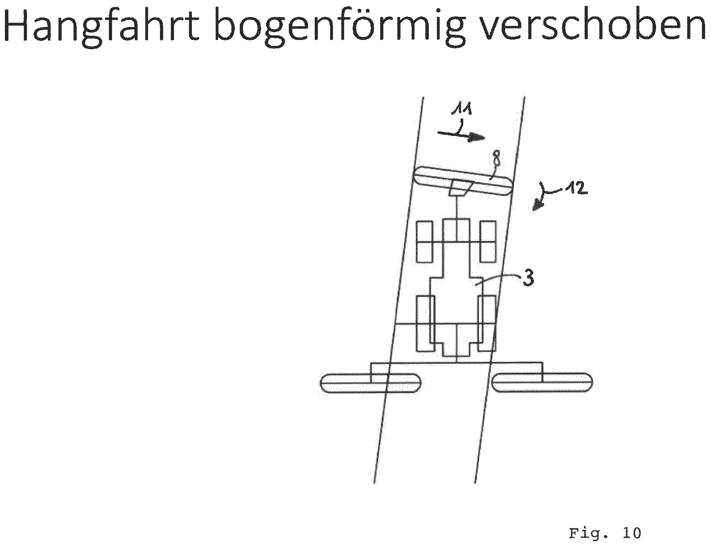

Wie die Figuren 9 und 10 verdeutlichen, kann auch bei schrägen Hangfahrten das genannte Problem gelöst werden, dass die Hinterräder des Schleppers 3 unbearbeitetes Erntegut überfahren und die heckseitigen Seitenflügel der Erntemaschine 1 keine ausreichende Überlappung mehr zum frontseitigen Arbeitsaggregat 8 haben. Figur 9 verdeutlicht dabei eine schräge Hangfahrt mit Abdriften des Schleppers 3 ohne Verschiebung des frontseitigen Arbeitsaggregats 8, sodass einerseits das Problem entsteht, dass die hangabwärtigen Heckräder des Schleppers stehengelassenes Erntegut überfahren und der hangabwärtige Seitenflügel des Arbeitsaggregats keine ausreichende Überdeckung mehr hat. Im Gegensatz hierzu verdeutlicht Figur 8, dass durch die vorgeschlagene Querverschiebung zur kurveninneren Seite hin in Verbindung mit einem Verschwenken des Arbeitsaggregats 8 zum Erhalt der maximalen Arbeitsbreite die genannte Problematik des Überfahrens von Erntegut durch die Heckräder und auch das Problem der Überlappung zur heckseitigen Seitenflügeln gelöst werde kann.

## Patentansprüche

1. Erntemaschine zum Frontanbau an einen Schlepper (3), insbesondere Mähmaschine, mit einem sich quer zur Fahrtrichtung (10) erstreckenden Arbeitsaggregat (8), einem Anbaubock (2) zum frontseitigen Anbau an den Schlepper (3) sowie einer mehrachsig beweglichen Aufhängung (5) zum beweglichen Aufhängen des Arbeitsaggregats (8) am Anbaubock (2), wobei die mehrachsige Beweglichkeit der Aufhängung (5) eine translatorische Beweglichkeit zum Verschieben des Arbeitsaggregats (8) entlang einer Bewegungsbahn (13) liegend quer zur Fahrtrichtung (10) sowie eine aufrechte Schwenkachse (12) zum Verschwenken des Arbeitsaggregats (8) aufweist, **dadurch gekennzeichnet, dass** eine Schwenksteuerung zum Steuern des Verschwenkens des Arbeitsaggregats (8) um die aufrechte Schwenkachse (12) in Abhängigkeit der Querverschiebung entlang der Bewegungsbahn (13) vorgesehen und dazu ausgebildet ist, die Arbeitsaggregatsseite, zu der hin die Verschiebung erfolgt, entgegen der Fahrtrichtung (10) nach hinten und/oder die gegenüberliegende Arbeitsaggregatsseite in Fahrtrichtung nach vorne zu verschwenken.

2. Erntemaschine nach dem vorhergehenden Anspruch, wobei die translatorische, sich liegend quer zur Fahrtrichtung (10) erstreckende Bewegungsbahn (13) bogenförmig, in Fahrtrichtung nach vorne konvex gekrümmt ist, insbesondere zumindest näherungsweise eine Kreisbahn ist, deren Krümmungsmittelpunkt unter dem Schlepper (2) oder in Fahrtrichtung hinter dem Schlepper (2) liegt.

3. Erntemaschine nach einem der vorhergehenden Ansprüche, wobei die genannte Schwenksteuerung (38) eine mechanische Zwangskoppelung der translatorischen Beweglichkeit entlang der Bewegungsbahn (13) und der Schwenkbarkeit um die aufrechte Schwenkachse (12) aufweist.

4. Erntemaschine nach einem der vorhergehenden Ansprüche, wobei die Schwenksteuerung (38) eine Lenkeranordnung (15) aufweist, die in einer liegenden Ebene verschwenkbar ausgebildet ist und/oder aufrechte Schwenkachsen aufweist, und vorzugsweise ein Viergelenk bildet, dessen vier Gelenkpunkte ein Trapez bilden.

5. Erntemaschine nach einem der vorhergehenden Ansprüche, wobei die Aufhängung (5) zwei Lenker (16, 17) aufweist, die einerseits anbaubockseitige Anlenkpunkte (18, 19) und andererseits arbeitsaggregatsseitige Anlenkpunkte (20, 21) aufweisen, an denen die genannten Lenker (16, 17) jeweils um aufrechte Schwenkachsen schwenkbar angelenkt sind, wobei die Lenker (16, 17) das Arbeitsaggregat (8) tragen und/oder zumindest gewichtsentlastet über den Boden führen.

6. Erntemaschine nach einem der vorhergehenden Ansprüche, wobei die Lenker (16, 17) der Lenkeranordnung (15) mit ihren Anlenkpunkten (18 bis 21) ein sich in Fahrtrichtung nach vorne aufspreizendes, in der unausgelenkten Neutralstellung des Arbeitsaggregats (8) symmetrisch zur vertikalen Längsmittelebene des Schleppers angeordnetes Trapez definieren.

7. Erntemaschine nach einem der Ansprüche 4 bis 6, wobei die genannte Lenkeranordnung (15) eine verstellbare Kinematik aufweist.

8. Erntemaschine nach dem vorhergehenden Anspruch, wobei zumindest einer der Lenker (16, 17) der Lenkeranordnung (15) längenveränderbar ausgebildet ist, wobei ein Verstellantrieb zum Längenverstellen des Lenkers (16) während des Arbeitsbetriebs der Erntemaschine vorgesehen ist.

9. Erntemaschine nach einem der vorhergehenden Ansprüche, wobei die Aufhängung (5) vom Anbaubock (2) in Fahrtrichtung (10) nach vorne auskragt und das Arbeitsaggregat (8) schiebend aufhängt.

10. Erntemaschine nach einem der vorhergehenden Ansprüche, wobei die Schwenksteuerung (38) dazu ausgebildet ist, den Schwenkwinkel des Arbeitsaggregats (8) um die aufrechte Schwenkachse (12) mit zunehmender Querverschiebung zu einer Seite hin kontinuierlich zu erhöhen, sodass bei maximaler Seitenverschiebung die maximale Verschwenkung eingestellt ist.

11. Erntemaschine nach einem der vorhergehenden Ansprüche, wobei die Schwenksteuerung (38) dazu ausgebildet ist, eine maximale Verschwenkung von mindestens +/- 3° oder mindestens +/-5° oder mindestens +/-10° vorzusehen, insbesondere eine maximale Verschwenkung im Bereich von +/- 3° bis +/-15° oder +/- 5° bis +/- 10° vorzusehen.

12. Erntemaschine nach einem der vorhergehenden Ansprüche, wobei die Aufhängung (5) eine maximale Querverstellung für das Arbeitsaggregat (8) im Bereich von 5% bis 20% oder 5% bis 15% der Arbeitsbreite des Arbeitsaggregats (8) aus der Neutralstellung zu jeder Seite hin vorsieht.

13. Erntemaschine nach einem der vorhergehenden Ansprüche, wobei ein fremdenergiebetätigter Stellaktor (35), insbesondere in Form eines Hydraulikzylinders, zum Betätigen sowohl der Querverstellung entlang der Bewegungsbahn (13) als auch der Verschwenkung um die Schwenkachse (12) vorgesehen ist.

14. Erntemaschine nach einem der vorhergehenden Ansprüche, wobei eine Steuervorrichtung (36) zum Steuern der Beweglichkeiten der Aufhängung (5) in Abhängigkeit eines Betriebssignals, das einen relevanten Betriebszustand kennzeichnet, vorgesehen ist.

15. Erntemaschine nach dem vorhergehenden Anspruch, wobei die Steuervorrichtung (36) die Querverschiebung und Verschwenkung des Arbeitsaggregats (8)
- in Abhängigkeit eines Lenksignals, das den Lenkwinkel des Schleppers (3) angibt, und/oder
- in Abhängigkeit eines Abdriftsignals, das ein Abdriften des Schleppers (3) bei schrägen Hangfahrten charakterisiert,
- und/oder in Abhängigkeit eines Neigungssignals, das eine Hangneigung quer zur Fahrtrichtung und/oder eine Querneigung des Arbeitsaggregats (8) und/oder des Schleppers (3) charakterisiert, steuert.
